(19) Europäisches Patentamt / European Patent Office / Office européen des brevets

(11) **EP 4 138 159 A1**

(12) **EUROPEAN PATENT APPLICATION**
published in accordance with Art. 153(4) EPC

(43) Date of publication:
**22.02.2023 Bulletin 2023/08**

(21) Application number: **21788988.0**

(22) Date of filing: **12.04.2021**

(51) International Patent Classification (IPC):
**H01M 4/505** (2010.01)     **H01M 4/525** (2010.01)

(52) Cooperative Patent Classification (CPC):
**H01M 4/505; H01M 4/525;** Y02E 60/10

(86) International application number:
**PCT/JP2021/015128**

(87) International publication number:
**WO 2021/210524 (21.10.2021 Gazette 2021/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.04.2020 JP 2020072300**

(71) Applicant: **SUMITOMO CHEMICAL COMPANY, LIMITED**
**Tokyo 103-6020 (JP)**

(72) Inventor: **MATSUMOTO, Yuki**
**Niihama-shi, Ehime 792-8521 (JP)**

(74) Representative: **Vossius & Partner Patentanwälte Rechtsanwälte mbB Siebertstraße 3 81675 München (DE)**

(54) **POSITIVE ELECTRODE ACTIVE MATERIAL PARTICLES FOR LITHIUM SECONDARY BATTERY, POSITIVE ELECTRODE FOR LITHIUM SECONDARY BATTERY, AND LITHIUM SECONDARY BATTERY**

(57) Positive electrode active material particles for a lithium secondary battery containing at least Li and Ni, wherein, when a volume magnetic susceptibility of one whole particle of the positive electrode active material particles for a lithium secondary battery is obtained in each of a plurality of the particles, a mode of individual volume magnetic susceptibilities in a range of 0.004 or more and 0.04 or less is 0.004 or more and less than 0.012.

FIG. 1A

EP 4 138 159 A1

**Description**

[Technical Field]

The present invention relates to positive electrode active material particles for a lithium secondary battery, a positive electrode for a lithium secondary battery, and a lithium secondary battery.
Priority is claimed on Japanese Patent Application No. 2020-072300, filed in Japan on April 14, 2020, the content of which is incorporated herein by reference.

[Background Art]

Attempts of putting lithium secondary batteries into practical use not only for small-sized power sources in mobile phone applications, notebook personal computer applications, and the like but also for medium-sized or large-sized power sources in automotive applications, power storage applications, and the like have already been underway. Lithium metal composite oxides are in use as positive electrode active materials for lithium secondary batteries.
A variety of attempts are underway in order to improve the battery characteristics of a variety of secondary batteries including lithium secondary batteries. For example, Patent Document 1 describes a material having a favorable electrical conductivity and capable of functioning as an electrode active material. Patent Document 1 describes that composite oxides having a molar magnetic susceptibility that changes to a small extent in a temperature range of about 100 K to 300 K exhibit a favorable electrical conductivity.

[Citation List]

[Patent Document]

[Patent Document 1]
JP-A-2005-145790

[Summary of Invention]

[Technical Problem]

When a lithium secondary battery has been charged, lithium ions are desorbed in the positive electrode active material for the lithium secondary battery. In addition, when the lithium secondary battery has been discharged, lithium ions are inserted in the positive electrode active material for the lithium secondary battery. With the expansion of the application fields of lithium secondary batteries, there is a demand that lithium ions can migrate smoothly and the battery characteristics are improved.
The present invention has been made in view of the above-described circumstances, and an object of the present invention is to provide positive electrode active material particles for a lithium secondary battery, a positive electrode for a lithium secondary battery, and a lithium secondary battery in which lithium ions can smoothly migrate and with which the battery characteristics of the lithium secondary battery can be improved.

[Solution to Problem]

The present invention includes [1] to [11].

[1] Positive electrode active material particles for a lithium secondary battery containing at least Li and Ni, in which, when a volume magnetic susceptibility of one whole particle of the positive electrode active material particles for a lithium secondary battery is obtained in each of a plurality of the particles, a mode of individual volume magnetic susceptibilities in a range of 0.004 or more and 0.04 or less is 0.004 or more and less than 0.012.
[2] The positive electrode active material particles for a lithium secondary battery according to [1], in which an average value of the volume magnetic susceptibilities is 0.001 or more and 0.3 or less.
[3] The positive electrode active material particles for a lithium secondary battery according to [1] or [2], in which a median value of the volume magnetic susceptibilities is 0.00003 or more and 0.16 or less.
[4] The positive electrode active material particles for a lithium secondary battery according to any one of [1] to [3], in which a standard deviation of the volume magnetic susceptibilities is 0.0018 or more and 0.4 or less.
[5] The positive electrode active material particles for a lithium secondary battery according to any one of [1] to [4], in which an average value of number-based particle diameters of the positive electrode active material particles for a lithium secondary battery is 0.2 µm or more and 50 µm or less.

[6] The positive electrode active material particles for a lithium secondary battery according to any one of [1] to [5], in which a median value of number-based particle diameters of the positive electrode active material particles for a lithium secondary battery is 0.2 µm or more and 40 µm or less.

[7] The positive electrode active material particles for a lithium secondary battery according to any one of [1] to [6], in which a standard deviation of number-based particle diameters of the positive electrode active material particles for a lithium secondary battery is 0.2 µm or more and 40 µm or less.

[8] The positive electrode active material particles for a lithium secondary battery according to any one of [1] to [7], containing a paramagnetic material or a diamagnetic material.

[9] The positive electrode active material particles for a lithium secondary battery according to any one of [1] to [8], which is represented by a composition formula (1).

$$Li[Li_x(Ni_{(1-y-z-w)}Co_yMn_zM_w)_{1-x}]O_2 \cdots \qquad (I)$$

(Here, M represents one or more elements selected from the group consisting of Cu, Ti, Mg, Al, W, B, Mo, Nb, Zn, Sn, Zr, Ga, and V, and $-0.1 \leq x \leq 0.2$, $0 < y < 0.5$, $0 \leq z \leq 0.8$, $0 \leq w \leq 0.1$, and $y + z + w < 1$ are satisfied.)

[10] A positive electrode for a lithium secondary battery containing the positive electrode active material particles for a lithium secondary battery according to any one of [1] to [9].

[11] A lithium secondary battery having the positive electrode for a lithium secondary battery according to [10].

[Advantageous Effects of Invention]

According to the present invention, it is possible to provide positive electrode active material particles for a lithium secondary battery, a positive electrode for a lithium secondary battery, and a lithium secondary battery in which lithium ions can smoothly migrate and with which the battery characteristics of the lithium secondary battery can be improved.

[Brief Description of Drawings]

Fig. 1A is a schematic configuration view showing an example of a lithium secondary battery.
Fig. 1B is a schematic configuration view showing the example of the lithium secondary battery.
Fig. 2 is a schematic view showing a laminate that an all-solid-state lithium-ion secondary battery includes.
Fig. 3 is a schematic view showing an entire configuration of the all-solid-state lithium-ion secondary battery.

[Description of Embodiments]

<Definition>

In the present specification, the battery characteristics are evaluated with the initial charge capacity and the initial discharge capacity.

In the present specification, "initial charge capacity" and "initial discharge capacity" are measured by the following methods.

First, an assembled coin-type lithium secondary battery is left to stand at room temperature for 10 hours to sufficiently impregnate the separator and the positive electrode mixture layer with an electrolytic solution.

Next, constant-current constant-voltage charging by which the lithium secondary battery is constant-current charged up to 4.3 V at room temperature and 1 mA and then constant-voltage charged at 4.3 V is carried out for 5 hours, and then constant-current discharging by which the lithium secondary battery is discharged to 2.5 V at 1 mA is carried out.

The charge capacity is measured, and the obtained value is defined as the "initial charge capacity" (mAh/g).

The discharge capacity is measured, and the obtained value is defined as the "initial discharge capacity" (mAh/g).

In the present specification, in a case where the composition is "Ni/Co/Mn = 85/10/5", when the initial charge capacity is 226 mAh/g or more, the initial charge capacity is evaluated as large.

In the present specification, in a case where the composition is "Ni/Co/Al = 88/9/3", when the initial charge capacity is 221 mAh/g or more, the initial charge capacity is evaluated as large.

In the present specification, in a case where the composition is "Ni/Co/Mn = 85/10/5", when the initial discharge capacity is 197 mAh/g or more, the initial discharge capacity is evaluated as large.

In the present specification, in a case where the composition is "Ni/Co/Al = 88/9/3", when the initial discharge capacity is 192 mAh/g or more, the initial discharge capacity is evaluated as large.

In the present specification, "volume magnetic susceptibility" means the magnetic susceptibility per unit volume of one whole particle of the positive electrode active material particles for a lithium secondary battery. Here, one particle of the positive electrode active material particles for a lithium secondary battery is a unit that is independently present as a particle and can be any of a primary particle and a secondary particle to be described below.

In the present specification, "magnetic susceptibility" is a physical property value that indicates the degree of magnetic polarization (magnetization) of a substance in a static magnetic field.

In the present specification, "ferromagnetism" means a property of, when a magnetic field is applied from the outside, strongly exhibiting magnetism in the same direction as that of the external magnetic field. A material with ferromagnetism is regarded as a ferromagnetic material. The ferromagnetic material has a property of maintaining strong magnetism even when the external magnetic field is nullified. Examples of the ferromagnetic material include iron (Fe), cobalt (Co), nickel (Ni), and the like. When coexisting with at least one of a paramagnetic material and a diamagnetic material, the ferromagnetism of the whole ferromagnetic material weakens, and thereby the conductivity is likely to become high.

In the present specification, "paramagnetism" means a property of, when a magnetic field is applied from the outside, weakly exhibiting magnetism in the same direction as that of the external magnetic field. A material with paramagnetism is regarded as a paramagnetic material. The paramagnetic material has a property of losing magnetism when the external magnetic field is nullified. Examples of the paramagnetic material include aluminum (Al), chromium (Cr), molybdenum (Mo), sodium (Na), titanium (Ti), zirconium (Zr), and the like.

In the present specification, "diamagnetism" means a property of, when a strong magnetic field is applied from the outside, exhibiting extremely weak magnetism in the opposite direction. A material with diamagnetism is regarded as a diamagnetic material. The diamagnetic material has a property of losing the magnetic field when the external magnetic field is nullified. Examples of the diamagnetic material include gold (Au), silver (Ag), copper (Cu), zinc (Zn), silicon (Si), silicon carbide (SiC), aluminum oxide ($Al_2O_3$), silica ($SiO_2$), silica/alumina ($SiO_2Al_2O_3$), titanium oxide ($TiO_2$), and the like.

In the present specification, "antiferromagnetism" means a property of having no magnetic moment regardless of an external magnetic field. A material with antiferromagnetism is regarded as an antiferromagnetic material. Examples of the antiferromagnetic material include manganese (Mn), chromium (Cr), and the like.

In the present embodiment, a metal composite compound will be hereinafter referred to as "MCC", a lithium metal composite oxide will be hereinafter referred to as "LiMO", and a positive electrode (cathode) active material for lithium secondary batteries will be hereinafter referred to as "CAM".

In the present embodiment, "positive electrode active material particles for a lithium secondary battery" are referred to as "CAM particles" in some cases.

In one aspect of the present embodiment, the CAM particles are composed of primary particles alone.

In one aspect of the present embodiment, the CAM particles are composed of secondary particles alone, which are each an aggregate of primary particles.

In one aspect of the present embodiment, the CAM particles are composed of secondary particles that are each an aggregate of primary particles and primary particles that are independently present from the secondary particles.

In one aspect of the present embodiment, an aggregate of the CAM particles is a powder.

"Ni" refers not to a nickel metal but to a nickel atom. Similarly, "Co", "Li", "Na", and the like also each refer to a cobalt atom, a lithium atom, a sodium atom, or the like.

<CAM particles>

The CAM particles of the present embodiment contain at least Li and Ni.

In the present embodiment, the volume magnetic susceptibility of one whole particle of the CAM particle for a lithium secondary battery is measured by the following method.

[Measurement method of volume magnetic susceptibility]

A medium that is used for the measurement is 75% glycerin. The measurement temperature is set to normal temperature (23°C). The following formula is used to calculate the volume magnetic susceptibility. A magnetic field is applied to the CAM particles dispersed in the medium, and an image of the moving CAM particles is analyzed, thereby measuring the volume magnetic susceptibility of one whole particle of the CAM particle.

[Math 1]

$$v = \frac{2}{9}\frac{\left(X_p - X_m\right)}{\mu_0 \eta} r^2 B \frac{dB}{dx}$$

In the formula, $X_p$ is the volume magnetic susceptibility of the CAM particle for a lithium secondary battery. $X_m$ is the volume magnetic susceptibility of the medium. $\eta$ is the coefficient of viscosity, $\mu_0$ is the magnetic permeability of the vacuum. B is the magnetic flux density. r is the radius of the CAM particle. v is the magnetophoretic velocity of the moving CAM particle.

The volume magnetic susceptibility can be measured using a magnetic susceptibility measuring instrument. As the magnetic susceptibility measuring instrument, for example, a fine particle magnetic susceptibility meter (KMG-001) manufactured by Yamato Scientific Co., Ltd. can be used.

<<Mode>>

The mode is calculated using individual volume magnetic susceptibilities obtained by the measurement of 1000 randomly-selected CAM particles. When the number of the CAM particles is 1000 or more, it is considered that there is no significant fluctuation in the mode to be obtained. In addition, since the CAM particles are randomly selected, the selected 1000 CAM particles can be a mixture of primary particles and secondary particles, only primary particles, or only secondary particles.

In the present embodiment, the mode of the volume magnetic susceptibilities in a range of 0.004 or more and 0.04 or less is preferably 0.0041 or more, more preferably 0.0042 or more, and still more preferably 0.0043 or more.

The mode is less than 0.012, preferably less than 0.0119, more preferably less than 0.0118, and still more preferably less than 0.0117.

The upper limit value and lower limit value of the mode can be randomly combined together.

As the combination of the upper limit value and lower limit value of the mode, 0.004 or more and less than 0.012, 0.0041 or more and less than 0.012, and 0.0042 or more and less than 0.012 are exemplary examples.

In the CAM particles of the present embodiment in which the mode is in the above-described range, the desorption and insertion of lithium ions proceed smoothly on the surfaces of the CAM particles. Therefore, the CAM particles of the present embodiment have an improved lithium ion conductivity. When the CAM particles of the present embodiment in which the mode is in the above-described range are used, it is possible to improve the initial charge capacity and the initial discharge capacity of lithium secondary batteries.

<<Average value of volume magnetic susceptibilities>>

The average value is calculated using individual volume magnetic susceptibilities obtained by the measurement of at least 1000 CAM particles.

In the present embodiment, the average value is preferably 0.001 or more, more preferably 0.002 or more, and still more preferably 0.003 or more.

The average value is preferably 0.3 or less, more preferably 0.2 or less, and still more preferably 0.1 or less.

The upper limit value and lower limit value of the average value can be randomly combined together.

As the combination of the upper limit value and lower limit value of the average value, 0.001 or more and 0.3 or less, 0.002 or more and 0.2 or less, and 0.003 or more and 0.1 or less are exemplary examples.

In the CAM particles of the present embodiment in which the average value is 0.001 or more and 0.3 or less, lithium ions can smoothly migrate, and it is possible to improve the battery characteristics of the lithium secondary battery.

<<Median value of volume magnetic susceptibilities>>

The median value is calculated using individual volume magnetic susceptibilities obtained by the measurement of at least 1000 CAM particles.

In the present embodiment, the median value is preferably 0.00003 or more, more preferably 0.00004 or more, and still more preferably 0.00005 or more.

The median value is preferably 0.16 or less, more preferably 0.15 or less, and still more preferably 0.14 or less.

The upper limit value and lower limit value of the median value can be randomly combined together.

As the combination, the median value of 0.00003 or more and 0.16 or less, 0.00004 or more and 0.15 or less, and 0.00005 or more and 0.14 or less are exemplary examples.

In the CAM particles of the present embodiment in which the median value is 0.00003 or more and 0.16 or less, lithium ions can smoothly migrate, and it is possible to improve the battery characteristics of the lithium secondary battery.

<<Standard deviation of volume magnetic susceptibilities>>

The standard deviation is calculated using individual volume magnetic susceptibilities obtained by the measurement of at least 1000 CAM particles.

In the CAM particles of the present embodiment, the standard deviation calculated by the above-described method is preferably 0.0018 or more and 0.4 or less. The standard deviation is more preferably 0.0019 or more and still more preferably 0.002 or more. The standard deviation is more preferably 0.39 or less.

The upper limit value and lower limit value of the standard deviation can be randomly combined together. As the combination of the upper limit value and lower limit value of the standard deviation, 0.0019 or more and 0.39 or less and 0.002 or more and 0.4 or less are exemplary examples.

The CAM particles of the present embodiment in which the standard deviation is in the above-described range mean that the variation in the volume magnetic susceptibility of the surface of each CAM particle is small. When such CAM particles are used, the variation in battery characteristics becomes small.

[Diamagnetic layer]

The CAM particles of the present embodiment are preferably particles having a diamagnetic layer on the surface of a LiMO particle. The diamagnetic layer may be provided in a manner of coating the entire surface of a LiMO or may be formed in a manner of coating a part of the surface of the LiMO.

The diamagnetic layer is a layer in which the content of an aluminum element is larger than that in the LiMO. Specifically, the content of the aluminum element is preferably 10% to 30% by mass and more preferably 11% to 29% by mass with respect to the total mass of the diamagnetic layer. The diamagnetic layer may contain an element that is not diamagnetic. The proportion of the element that is not diamagnetic is preferably 1% to 70% by mass with respect to the total mass of the diamagnetic layer.

The LiMO in the present embodiment contains at least Li and Ni. The LiMO contains Ni and thus has ferromagnetism derived from Ni. The diamagnetic layer is provided on the surface of the ferromagnetic LiMO, whereby lithium ions can migrate smoothly in the diamagnetic layer on the surface of the CAM particle.

In the present embodiment, "the diamagnetic layer is provided on the surface of the LiMO particle" means that the diamagnetic layer is present on a part or all of the surface of the LiMO. In a case where a part of the surface of the LiMO is coated with the diamagnetic layer, the diamagnetic layer is preferably distributed in at least 0.1% or more of a region of the surface of the LiMO and more preferably distributed in 0.2% or more of a region.

The proportion of the surface of the LiMO coated with the diamagnetic layer can be calculated as described below. The coating rate is obtained by dividing the weight of the diamagnetic element increased detected by ICP emission spectroscopic analysis before and after calcining by the weight of the LiMO.

In the present embodiment, the CAM particles may include the diamagnetic layer on the surface of the primary particle of the LiMO or may include the diamagnetic layer on the surface of the secondary particles of the LiMO.

The ferromagnetic particles having the diamagnetic layer have high lithium ion conductivity.

(Layered structure)

In the present embodiment, the crystal structure of the LiMO is a layered structure and more preferably a hexagonal crystal structure or a monoclinic crystal structure. In the present specification, "layered structure" means a crystal structure in which layers each formed of lithium atoms, transition metal atoms, or oxygen atoms are laminated.

The hexagonal crystal structure belongs to any one space group selected from the group consisting of P3, $P3_1$, $P3_2$, R3, P-3, R-3, P312, P321, $P3_1$12, $P3_1$21, $P3_2$12, $P3_2$21, R32, P3m1, P31m, P3c1, P31c, R3m, R3c, P-31m, P-31c, P-3m1, P-3c1, R-3m, R-3c, P6, $P6_1$, $P6_5$, $P6_2$, $P6_4$, $P6_3$, P-6, P6/m, $P6_3$/m, P622, $P6_1$22, $P6_5$22, $P6_2$22, $P6_4$22, $P6_3$22, P6mm, P6cc, $P6_3$cm, $P6_3$mc, P-6m2, P-6c2, P-62m, P-62c, P6/mmm, P6/mcc, P63/mcm, and P63/mmc.

In addition, the monoclinic crystal structure belongs to any one space group selected from the group consisting of P2, $P2_1$, C2, Pm, Pc, Cm, Cc, P2/m, $P2_1$/m, C2/m, P2/c, $P2_1$/c, and C2/c.

Among these, in order to obtain a lithium secondary battery having a high discharge capacity, the crystal structure is particularly preferably a hexagonal crystal structure belonging to the space group R-3m or a monoclinic crystal structure belonging to C2/m.

[Calculation method of number-based particle diameters]

In the present embodiment, the average value of the number-based particle diameters of the CAM particles is calculated by image analysis means of a particle diameter measuring instrument that is provided in the volume magnetic susceptibility measuring instrument. The particle diameter of the CAM that is measured with the volume magnetic susceptibility measuring instrument means the equivalent circle diameter of the particle.

<<Average value of number-based particle diameters>>

The average value of the number-based particle diameters obtained by the measurement of at least 1000 CAM particles is preferably 0.2 $\mu$m or more and 50 $\mu$m or less.
As the lower limit of the average value, 0.3 $\mu$m or more, 0.4 $\mu$m or more, and 0.5 $\mu$m or more are exemplary examples. As the upper limit of the average value, 40 $\mu$m or less, 30 $\mu$m or less, and 20 $\mu$m or less are exemplary examples.
The upper limit value and lower limit value of the average value can be randomly combined together.
As the combination of the upper limit value and lower limit value of the average value, 0.3 $\mu$m or more and 40 $\mu$m or less, 0.4 $\mu$m or more and 30 $\mu$m or less, and 0.5 $\mu$m or more and 20 $\mu$m or less are exemplary examples. When the average value is 0.2 $\mu$m or more and 50 $\mu$m or less, lithium ions can migrate smoothly, and it is possible to improve the battery characteristics of the lithium secondary battery.

<<Median value of number-based particle diameters>>

The median value of the number-based particle diameters obtained by the measurement of at least 1000 CAM particles is preferably 0.2 $\mu$m or more and 40 $\mu$m or less.
As the lower limit of the median value, 0.3 $\mu$m or more, 0.4 $\mu$m or more, and 0.5 $\mu$m or more are exemplary examples. As the upper limit of the median value, 35 $\mu$m or less, 30 $\mu$m or less, and 20 $\mu$m or less are exemplary examples.
The upper limit value and lower limit value of the median value can be randomly combined together.
As the combination of the upper limit value and lower limit value of the median value, 0.3 $\mu$m or more and 35 $\mu$m or less, 0.4 $\mu$m or more and 30 $\mu$m or less, and 0.5 $\mu$m or more and 20 $\mu$m or less are exemplary examples. When the median value is 0.2 $\mu$m or more and 40 $\mu$m or less, lithium ions can migrate smoothly, and it is possible to improve the battery characteristics of the lithium secondary battery.

<<Standard deviation of number-based particle diameters>>

The standard deviation of the number-based particle diameters obtained by the measurement of at least 1000 CAM particles is preferably 0.2 $\mu$m or more and 40 $\mu$m or less.
As the standard deviation, 0.3 $\mu$m or more, 0.4 $\mu$m or more, and 0.5 $\mu$m or more are exemplary examples. As the upper limit value of the standard deviation, 35 $\mu$m or less, 30 $\mu$m or less, and 20 $\mu$m or less are exemplary examples.
The upper limit value and lower limit value of the standard deviation can be randomly combined together.
As the combination of the upper limit value and lower limit value of the standard deviation, 0.3 $\mu$m or more and 35 $\mu$m or less, 0.4 $\mu$m or more and 30 $\mu$m or less, and 0.5 $\mu$m or more and 20 $\mu$m or less are exemplary examples. When the standard deviation is 0.2 $\mu$m or more and 40 $\mu$m or less, lithium ions can migrate smoothly, and it is possible to improve the battery characteristics of the lithium secondary battery.

[Composition Formula]

The CAM particles of the present embodiment are preferably represented by the following composition formula (1).

$$Li[Li_x(Ni_{(1-y-z-w)}Co_yMn_zM_w)_{1-x}]O_2 \cdots \qquad (1)$$

(Here, M represents one or more elements selected from the group consisting of Cu, Ti, Mg, Al, W, B, Mo, Nb, Zn, Sn, Zr, Ga, and V, and $-0.1 \leq x \leq 0.2$, $0 < y \leq 0.5$, $0 \leq z \leq 0.8$, $0 < w < 0.1$, and $y + z + w < 1$ are satisfied.)

• x

From the viewpoint of obtaining a lithium-ion secondary battery having favorable cycle characteristics, x is preferably more than 0, more preferably 0.01 or more, and still more preferably 0.02 or more. In addition, from the viewpoint of obtaining a lithium-ion secondary battery having a higher initial coulombic efficiency, x is preferably 0.1 or less, more preferably 0.08 or less, and still more preferably 0.06 or less.

The upper limit value and lower limit value of x can be randomly combined together.

In the present embodiment, x is preferably $0 < x \leq 0.2$ and more preferably $0 < x \leq 0.1$.

$$\cdot \ y + z + w$$

From the viewpoint of obtaining a lithium secondary battery having a high discharge capacity, $y + z + w$ is preferably $0 < y + z + w \leq 0.5$, more preferably $0 < y + z + w \leq 0.25$, and still more preferably $0 < y + z + w \leq 0.2$.

• y

From the viewpoint of obtaining a lithium-ion secondary battery having a low battery internal resistance, y is preferably 0.01 or more, more preferably 0.05 or more, and still more preferably 0.06 or more. In addition, from the viewpoint of obtaining a lithium-ion secondary battery having high thermal stability, y is more preferably 0.35 or less and still more preferably 0.3 or less.

The upper limit value and lower limit value of y can be randomly combined together.

In the present embodiment, y is preferably $0 < y \leq 0.4$.

• z

In addition, from the viewpoint of obtaining a lithium secondary battery having high cycle characteristics, z is preferably 0.01 or more, more preferably 0.02 or more, and still more preferably 0.04 or more. In addition, from the viewpoint of obtaining a lithium-ion secondary battery having high preservability at high temperatures (for example, in an environment at 60°C), z is preferably 0.4 or less, more preferably 0.35 or less, and still more preferably 0.3 or less.

The upper limit value and lower limit value of z can be randomly combined together.

In the present embodiment, z is preferably $0.01 \leq z \leq 0.3$.

• Element M

An element M corresponds to a paramagnetic material or a diamagnetic material.

M in the composition formula (1) is one or more elements selected from the group consisting of Cu, Ti, Mg, Al, W, B, Mo, Nb, Zn, Sn, Zr, Ga, and V. Among these, the paramagnetic material is Ti, Mg, Al, W, Mo, Nb, S, Zr, and V. The diamagnetic material is Cu, B, Zn, and Ga.

In addition, from the viewpoint of setting the average value of the volume magnetic susceptibilities within the desired range of the present embodiment, M in the composition formula (1) is preferably one or more metals selected from the group consisting of Cu, Ti, Al, Mo, Zn, and Zr.

• w

w may be 0, but is preferably more than 0, more preferably 0.0005 or more, and still more preferably 0.001 or more. In addition, w is preferably 0.09 or less, more preferably 0.08 or less, and still more preferably 0.07 or less.

The upper limit value and lower limit value of w can be randomly combined together.

In the present embodiment, w is preferably $0.001 \leq w \leq 0.07$.

<Method for producing CAM particles>

In producing the CAM particles of the present embodiment, it is preferable that, first, a metal element other than Li, that is, an MCC containing Ni, which is an essential metal element, and a random metal element is prepared, and the MCC containing Ni and a random metal element and a lithium compound are calcined.

As the random metal element, for example, one or more metal elements selected from the group consisting of Co, Mn, Fe, Cu, Mg, Mo, Zn, Sn, Ga, and V are preferable.

The MCC containing Ni and the random metal element will be referred to as "precursor". As the precursor, a metal composite hydroxide containing a random metal element or a metal composite oxide containing a random metal element is preferable.

Hereinafter, regarding an example of a method for producing the CAM particles, a precursor production step and a CAM particle production step will be separately described.

(Precursor production step: Example 1)

Usually, the precursor can be produced by a well-known batch coprecipitation method or continuous coprecipitation method.

As the precursor, metal composite hydroxides containing Ni, Co, and Mn as metal elements are exemplary examples.

Hereinafter, a method for producing a precursor will be described in detail using a precursor containing Ni, Co, and Mn as the metal elements as an example.

First, a nickel salt solution, a cobalt salt solution, a manganese salt solution, and a complexing agent are reacted with one another by a coprecipitation method, particularly, the continuous method described in JP-A-2002-201028, thereby producing a precursor represented by $Ni_{(1-y-z)}Co_yMn_z(OH)_2$ (in the formula, $0 < y \leq 0.5$, $0 \leq z \leq 0.8$, and $y + z < 1$).

A nickel salt, which is the solute of the nickel salt solution, is not particularly limited, and, for example, any one or more of nickel sulfate, nickel nitrate, nickel chloride, and nickel acetate can be used.

As a cobalt salt that is a solute of the cobalt salt solution, for example, any one or more of cobalt sulfate, cobalt nitrate, cobalt chloride, and cobalt acetate can be used.

As a manganese salt that is a solute of the manganese salt solution, for example, any one or more of manganese sulfate, manganese nitrate, manganese chloride, and manganese acetate can be used.

The above-described metal salts are used in proportions corresponding to the composition ratio of $Ni_{(1-y-z)}Co_yMn_z(OH)_2$. In addition, as the solvent, water is used.

The complexing agent is a compound capable of forming a complex with ions of nickel, cobalt, and manganese in aqueous solutions. Examples thereof include an ammonium ion feeder, hydrazine, ethylenediaminetetraacetic acid, nitrilotriacetic acid, uracil diacetic acid, and glycine. As the ammonium ion feeder, ammonium salts such as ammonium hydroxide, ammonium sulfate, ammonium chloride, ammonium carbonate and ammonium fluoride are exemplary examples.

Regarding the amount of the complexing agent that is contained in the liquid mixture containing the nickel salt solution, the cobalt salt solution, the manganese salt solution, and the complexing agent, for example, the mole ratio of the complexing agent to the sum of the mole numbers of the metal salts is more than 0 and 2.0 or less.

In the co precipitation method, in order to adjust the pH value of the liquid mixture containing the nickel salt solution, the cobalt salt solution, the manganese salt solution, and the complexing agent, an alkaline aqueous solution is added to the liquid mixture before the pH of the liquid mixture turns from alkaline into neutral. As the alkaline aqueous solution, sodium hydroxide or potassium hydroxide can be used.

The value of the pH in the present specification is defined as a value measured when the temperature of the liquid mixture is 40°C. The pH of the liquid mixture is measured when the temperature of the liquid mixture sampled from a reaction vessel reaches 40°C.

In a case where the temperature of the sampled liquid mixture is lower than 40°C, the pH is measured when the liquid mixture has been heated to reach 40°C.

In a case where the temperature of the sampled liquid mixture is higher than 40°C, the pH is measured when the liquid mixture has been cooled to reach 40°C.

In addition, at the time of the reaction, the pH value in the reaction vessel is controlled in a range of, for example, pH 9 or higher and pH 13 or lower and preferably pH 11 or higher and pH 13 or lower. When the pH is pH 9 or more and pH 13 or less, the average value, median value, and standard deviation of the number-based particle diameters of the CAM particles can be controlled to the above-described ranges.

When the complexing agent in addition to the nickel salt solution, the cobalt salt solution, and the manganese salt solution is continuously supplied to the reaction vessel, Ni, Co, and Mn react with one another, and $Ni_{(1-y-z)}Co_yMn_z(OH)_2$ is generated.

At the time of the reaction, the temperature of the reaction vessel is controlled in a range of, for example, 20°C or higher and 80°C or lower and preferably 30°C or higher and 70°C or lower.

The substances in the reaction vessel are appropriately stirred and mixed together.

As the reaction vessel that is used in the continuous coprecipitation method, it is possible to use a reaction vessel in which the formed reaction precipitate is caused to overflow for separation.

The inside of the reaction vessel may be an inert atmosphere. In the inert atmosphere, it is possible to suppress the aggregation of elements that are more easily oxidized than Ni and to obtain a homogeneous metal composite hydroxide containing Ni.

In order to control the oxidation state of a reaction precipitate, a gas may be introduced into the reaction vessel.

As a method for introducing the gas, a method in which a predetermined gaseous species is aerated into the reaction vessel and a method in which the liquid mixture is directly bubbled are exemplary examples.

As the gas to be introduced, an inert gas, an oxidizing gas or a gas mixture of an inert gas and an oxidizing gas can be appropriately used. As the inert gas, for example, a nitrogen gas, an argon gas, carbon dioxide, and the like are exemplary examples. As the oxidizing gas, an air and an oxygen gas are exemplary examples.

In order to control the oxidation state of the reaction precipitate, a compound that oxidizes the reaction precipitate may be added into the reaction vessel.

As a compound that oxidizes the reaction product to be obtained, it is possible to use a peroxide such as hydrogen peroxide, a peroxide salt such as permanganate, perchloric acid, hypochlorous acid, nitric acid, halogen, ozone, or the like.

In order to control the reduction state of the reaction precipitate, a compound that reduces the reaction precipitate may be added into the reaction vessel.

As a compound that reduces the reaction product to be obtained, it is possible to use an organic acid such as oxalic acid or formic acid, sulfite, hydrazine, or the like.

After the above-described reaction, the obtained reaction precipitate is washed with water and then dried, whereby the precursor is obtained.

According to the above-described method, a nickel cobalt manganese hydroxide as a nickel cobalt manganese composite compound is obtained as the precursor.

In addition, in a case where impurities derived from the liquid mixture remain in the reaction precipitate that has been washed with only water, the reaction precipitate may be washed with a weak acid water or an alkaline solution. As the alkaline solution that is used for washing, a solution containing sodium hydroxide or potassium hydroxide can be used.

In the above-described example, the nickel cobalt manganese composite hydroxide has been produced, but a nickel cobalt manganese composite oxide may be prepared.

For example, a nickel cobalt manganese composite oxide can be prepared by calcining the nickel cobalt manganese composite hydroxide. Regarding the calcining time, the total time taken while the temperature begins to be raised and reaches the calcining temperature and the holding of the composite metal hydroxide at the calcining temperature ends is preferably set to one hour or longer and 30 hours or shorter. The temperature rising rate in the heating step until the highest holding temperature is reached is preferably 180 °C/hour or faster, more preferably 200 °C/hour or faster, and particularly preferably 250 °C/hour or faster.

The highest holding temperature in the present specification is the highest temperature of the holding temperature of the atmosphere in a calcining furnace in a calcining step and means the calcining temperature in the calcining step. In the case of a main calcining step having a plurality of heating steps, the highest holding temperature means the highest temperature in each heating step.

The temperature rising rate in the present specification is calculated from the time taken while the temperature begins to be raised and reaches the highest holding temperature in a calcining device and a temperature difference between the temperature in the calcining furnace of the calcining device at the time of beginning to raise the temperature and the highest holding temperature.

(Precursor production step: Example 2)

The precursor in the present embodiment may be a metal composite hydroxide containing Ni, Co, and Al as metal elements. In this case, the precursor can be produced by the same method as described above (precursor production step: Example 1) except that an aluminum salt solution is used instead of the manganese salt solution.

As an aluminum salt that is a solute of the aluminum salt solution, for example, aluminum sulfate, sodium aluminate, or the like can be used.

(Production step of CAM particles)

The precursor obtained by the above-described step is dried and then mixed with a lithium compound.

In the present embodiment, the drying condition of the metal composite oxide or the metal composite hydroxide, which is the precursor, is not particularly limited. The drying condition may be, for example, any of the following conditions 1) to 3).

1) A condition under which the metal composite oxide or the metal composite hydroxide is not oxidized or reduced. Specifically, a drying condition under which an oxide remains as an oxide as it is or a drying condition under which a hydroxide remains as a hydroxide as it is.
2) A condition under which the metal composite hydroxide is oxidized. Specifically, a drying condition under which a hydroxide is oxidized to an oxide.
3) A condition under which the metal composite oxide is reduced. Specifically, a drying condition under which an oxide is reduced to a hydroxide.

In order for the condition under which the precursor is not oxidized or reduced, an inert gas such as nitrogen, helium, or argon may be used as the atmosphere during the drying.

In order for the condition under which a hydroxide is oxidized, oxygen or an air may be used as the atmosphere during the drying.

In addition, in order for the condition under which the metal composite oxide is reduced, a reducing agent such as hydrazine or sodium sulfite may be used in an inert gas atmosphere during the drying.

After being dried, the metal composite oxide or the metal composite hydroxide may be classified as appropriate.

The LiMO is obtained by calcining a mixture containing the precursor and the lithium compound.

As the mixture to be calcined, the following mixture 1 or mixture 2 is an exemplary example.

- Mixture 1: A mixture of the precursor and the lithium compound.
- Mixture 2: A mixture of the precursor, the lithium compound, and an inert melting agent.

As the lithium compound, any one of lithium carbonate, lithium nitrate, lithium acetate, lithium hydroxide, lithium hydroxide hydrate, and lithium oxide can be used or two or more thereof can be mixed together and used.

A diamagnetic material is added to the mixture 1 or the mixture 2, and the mixture is calcined in a state where the diamagnetic material is in contact with the mixture 1 or the mixture 2. This makes it possible to produce CAM particles in which a diamagnetic layer is provided on the surface of the ferromagnetic particle.

As the diamagnetic material, an alumina medium or an aluminum medium can be used. The alumina medium contains 99% by mass or more of alumina with respect to the total mass of the alumina medium and contains one or more elements selected from Si, K, Na, and Fe as impurities. The aluminum medium contains 99% by mass or more of Al with respect to the total mass of the aluminum medium and contains one or more elements selected from Si, K, Na, and Fe as impurities. The median values of the volume-based particle diameters of the aluminum medium and the aluminum medium are 2 to 2.2 mm. The median value of the volume-based particle diameters is a value that is measured by a sieving method in which a vibrating sieving device is used.

The amount of the diamagnetic material added is preferably 1% to 10% by mass and more preferably 2% to 9% by mass with respect to the total mass of the mixture 1 or the mixture 2. The mode, average value, median value, and standard deviation of the volume magnetic susceptibilities of the CAM particles can be adjusted to the ranges of the present embodiment by adjusting the amount of the diamagnetic material added.

The inert melting agent that can be used in the present embodiment is not particularly limited as long as the inert melting agent does not easily react with the mixture during the calcining. In the present embodiment, one or more selected from the group consisting of a fluoride of one or more elements selected from the group consisting of Na, K, Rb, Cs, Ca, Mg, Sr, and Ba (hereinafter, referred to as "A"), a chloride of A, a carbonate of A, a sulfate of A, a nitrate of A, a phosphate of A, a hydroxide of A, a molybdate of A, and A of tungstate are exemplary examples. Specifically, the compound described in JP6734491B is an exemplary example.

In the present embodiment, it is also possible to use two or more of these inert melting agents. In the case of using two or more kinds of inert melting agents, there is also a case where the melting point of all of the inert melting agents decreases.

In addition, among these inert melting agents, one or more salts selected from the group consisting of the carbonate of A, the sulfate of A, and the chloride of A are preferable.

In the present embodiment, the abundance of the inert melting agent during the calcining may be appropriately selected. As an example, the abundance of the inert melting agent during the calcining is preferably 0.1 parts by mass or more and more preferably 1 part by mass or more with respect to 100 parts by mass of the lithium compound. In addition, in a case where there is a need to accelerate the growth of the CAM particles, an inert melting agent other than the inert melting agents exemplified above may be jointly used. As the inert melting agent that is used in this case, ammonium salts such as $NH_4Cl$ and $NH_4F$ are exemplary examples.

The above-described lithium compound and precursor are used in consideration of the composition ratio of a final target product. For example, in the case of using a nickel cobalt manganese composite hydroxide, the lithium compound and the metal composite hydroxide are used in proportions that correspond to the composition ratio of $Li[Li_x(Ni_{(1-y-z)}Co_yMn_z)_{1-x}]O_2$ (in the formula, $-0.1 \leq x \leq 0.2$, $0 < y \leq 0.5$, $0 \leq z \leq 0.8$, and $y + z + w < 1$). In a case where Li is excessive (the mole ratio of Li contained is more than 1) in the CAM particles, which are the final target product, the lithium compound is mixed in a proportion at which the mole ratio of Li that is contained in the lithium compound to the metal element that is contained in the metal composite hydroxide becomes a ratio of more than 1.

CAM particles containing Li and Ni are obtained by calcining the mixture 1 or the mixture 2. In the calcining, a dry air, an oxygen atmosphere, an inert atmosphere, or the like is used depending on a desired composition.

The calcining step may be only one time of calcining or may have a plurality of calcining stages.

In a case where the calcining step has a plurality of calcining stages, a step in which the mixture is calcined at the highest temperature is referred to as the main calcining. Prior to the main calcining, a preliminary calcining in which the mixture is calcined at a lower temperature than in the main calcining may be carried out. In addition, after the main calcining, a post calcining in which the mixture is calcined at a lower temperature than in the main calcining may be carried out.

The calcining temperature (highest holding temperature) in the main calcining is preferably 600°C or higher, more preferably 700°C or higher, and particularly preferably 800°C or higher from the viewpoint of accelerating the particle growth of the CAM particles. In addition, from the viewpoint of maintaining the strength of the CAM particles, the calcining temperature is preferably 1200°C or lower, more preferably 1100°C or lower, and particularly preferably 1000°C or lower.

The upper limit value and lower limit value of the highest holding temperature in the main calcining can be randomly combined together.

As the combination, 600°C or higher and 1200°C or lower, 700°C or higher and 1100°C or lower, and 800°C or higher and 1000°C or lower are exemplary examples. When the highest holding temperature in the main calcining is set to 600°C or higher and 1200°C or lower and the calcining atmosphere is set to an oxygen atmosphere, the average value, median value, and standard deviation of the number-based particle diameters of the CAM particles can be controlled to the above-described ranges.

The calcining temperature in the preliminary calcining or the post calcining may be lower than the calcining temperature in the main calcining, and, for example, a range of 350°C or higher and 700°C or lower is an exemplary example.

The holding temperature in the calcining may be appropriately adjusted depending on the kind of a transition metal element that is used, a precipitant, or the amount.

In addition, as the time during which the mixture is held at the holding temperature, 0.1 hour or longer and 20 hours or shorter is an exemplary example, and 0.5 hours or longer and 10 hours or shorter is preferable. The temperature rising rate up to the holding temperature is usually 50 °C/hour or faster and 400 °C/hour or slower, and the temperature lowering rate from the holding temperature to room temperature is usually 10 °C/hour or faster and 400 °C/hour or slower. In addition, as the atmosphere for the sintering, it is possible to use the atmosphere, oxygen, nitrogen, argon or a gas mixture thereof.

After being calcined, the obtained calcined product is washed and dried after washing, whereby CAM particles containing Li and Ni are obtained.

As a washing liquid that is used for washing, pure water or an alkaline solution can be used.

After washing, the residual washing liquid is preferably removed by drying.

CAM particles containing lithium and nickel can be obtained by the above-described step.

The CAM particles are appropriately crushed and classified. When the CAM particles are crushed with a disc mill, the average value, median value, and standard deviation of the number-based particle diameters of the CAM particles can be controlled to the above-described ranges.

In the present embodiment, the performance evaluation of the CAM particles can be evaluated with the initial discharge capacity and the initial charge capacity obtained by the following method.

[Production of positive electrode for lithium secondary battery]

A paste-like positive electrode mixture is prepared by adding and kneading the CAM particles, a conductive material (acetylene black), and a binder (PVdF) in proportions at which the composition of CAM particles:conductive material:binder = 92:5:3 (mass ratio) is reached. During the preparation of the positive electrode mixture, N-methyl-2-pyrrolidone is used as an organic solvent.

[Production of lithium secondary battery (coin-type half cell)]

The following operation is carried out in a glove box under an argon atmosphere.

The positive electrode for a lithium secondary battery produced in the section <Production of positive electrode for lithium secondary battery> is placed on the lower lid of a part for a coin type battery R2032 (manufactured by Hohsen Corp.) with the aluminum foil surface facing downward, and a separator (polyethylene porous film) is placed on the positive electrode. 300 $\mu$l of an electrolytic solution was poured thereinto.

As the electrolytic solution, an electrolytic solution obtained by dissolving $LiPF_6$ in a liquid mixture of ethylene carbonate, dimethyl carbonate, and ethyl methyl carbonate in a volume ratio of 30:35:35 in a proportion of 1.0 mol/l is used.

Next, lithium metal is used as a negative electrode, and the negative electrode is placed on the upper side of the laminate film separator. An upper lid is placed through a gasket and caulked using a caulking machine, thereby producing a lithium secondary battery (coin-type half cell R2032; hereinafter, referred to as the "half cell" in some cases).

[Charge and discharge evaluation: initial charge capacity and initial discharge capacity]

Using the coin-type lithium secondary battery, the initial charge capacity and the initial discharge capacity can be measured and evaluated as described in the above-described method for measuring the "initial charge capacity" and the "initial discharge capacity".

<Lithium secondary battery>

Next, a positive electrode in which the CAM particles for a lithium secondary battery that are produced by the present embodiment are used as a CAM for a lithium secondary battery and a lithium secondary battery having this positive electrode will be described while describing the configuration of the lithium secondary battery.

CAM particles for the lithium secondary battery of the present embodiment are preferably composed of the CAM particles for a lithium secondary battery of the present embodiment, but may contain other components as long as the effect of the present invention is not impaired. For example, the content proportion of the CAM particles for a lithium secondary battery of the present embodiment with respect to the total mass (100% by mass) of the CAM particles for the lithium secondary battery is preferably 70% to 99% by mass and more preferably 80% to 98% by mass.

Furthermore, a positive electrode for a lithium secondary battery that is suitable in a case where the CAM of the present embodiment is used (hereinafter, referred to as the positive electrode in some cases) will be described.

Furthermore, a lithium secondary battery that is suitable for an application of a positive electrode will be described.

An example of the lithium secondary battery of the present embodiment includes a positive electrode, a negative electrode, a separator sandwiched between the positive electrode and the negative electrode, and an electrolytic solution disposed between the positive electrode and the negative electrode.

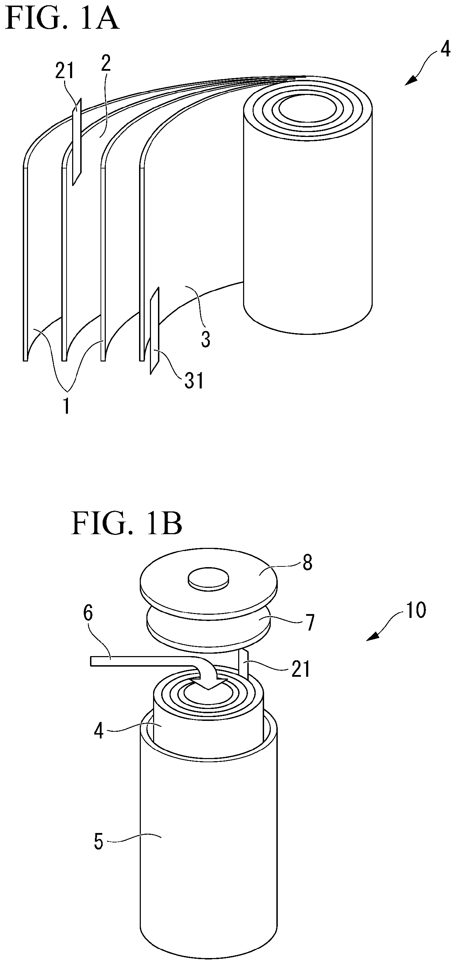

Fig. 1A and Fig. 1B are schematic views illustrating an example of the lithium secondary battery of the present embodiment. A cylindrical lithium secondary battery 10 of the present embodiment is produced as described below.

First, as shown in Fig. 1A, a pair of separators 1 having a strip shape, a stripshaped positive electrode 2 having a positive electrode lead 21 at one end, and a stripshaped negative electrode 3 having a negative electrode lead 31 at one end are laminated in the order of the separator 1, the positive electrode 2, the separator 1, and the negative electrode 3 and are wound to form an electrode group 4.

Next, as shown in Fig. 1B, the electrode group 4 and an insulator, not shown, are accommodated in a battery can 5, and then the can bottom is sealed. The electrode group 4 is impregnated with an electrolytic solution 6, and an electrolyte is disposed between the positive electrode 2 and the negative electrode 3. Furthermore, the upper portion of the battery can 5 is sealed with a top insulator 7 and a sealing body 8, whereby the lithium secondary battery 10 can be produced.

As the shape of the electrode group 4, for example, a columnar shape in which the cross-sectional shape becomes a circle, an ellipse, a rectangle, or a rectangle with rounded corners when the electrode group 4 is cut in a direction perpendicular to the winding axis is an exemplary example.

In addition, as a shape of the lithium secondary battery having the electrode group 4, a shape specified by IEC60086, which is a standard for a battery specified by the International Electrotechnical Commission (IEC), or by JIS C 8500 can be adopted. For example, shapes such as a cylindrical shape and a square shape can be exemplary examples.

Furthermore, the lithium secondary battery is not limited to the winding-type configuration and may be a laminate-type configuration in which the laminated structure of the positive electrode, the separator, the negative electrode, and the separator is repeatedly overlaid. As the laminate-type lithium secondary battery, a so-called coin-type battery, button-type battery, or paper-type (or sheet-type) battery can be an exemplary example.

Hereinafter, each configuration will be described in order.

(Positive electrode)

A positive electrode of the present embodiment can be produced by first adjusting a positive electrode mixture containing a CAM, a conductive material, and a binder and supporting the positive electrode mixture by a positive electrode current collector.

(Conductive material)

As the conductive material in the positive electrode of the present embodiment, a carbon material can be used. As the carbon material, graphite powder, carbon black (for example, acetylene black), a fibrous carbon material, and the like can be exemplary examples.

The proportion of the conductive material in the positive electrode mixture is preferably 5 to 20 parts by mass with respect to 100 parts by mass of the CAM.

(Binder)

As the binder in the positive electrode, a thermoplastic resin can be used. As the thermoplastic resin, polyimide resins; fluororesins such as polyvinylidene fluoride (hereinafter, referred to as PVdF in some cases) and polytetrafluoroethylene; polyolefin resins such as polyethylene and polypropylene, and the resins described in WO 2019/098384A1 or US2020/0274158A1 can be exemplary examples.

Two or more of these thermoplastic resins may be used in a mixture form. When a fluororesin and a polyolefin resin are used as the binder, the proportion of the fluororesin in the entire positive electrode mixture is set to 1 mass% or more and 10 mass% or less, and the proportion of the polyolefin resin is set to 0.1 mass% or more and 2 mass% or less, whereby it is possible to obtain a positive electrode mixture having both a high adhesive force to the positive electrode current collector and a high bonding force inside the positive electrode mixture.

(Positive electrode current collector)

As the positive electrode current collector in the positive electrode, a stripshaped member formed of a metal material such as Al, Ni, or stainless steel as a forming material can be used.

As a method for supporting the positive electrode mixture by the positive electrode current collector, a method in which a paste of the positive electrode mixture is prepared using an organic solvent, the paste of the positive electrode mixture to be obtained is applied to and dried on at least one surface side of the positive electrode current collector, and the positive electrode mixture is fixed by pressing is an exemplary example.

As the organic solvent that can be used in a case where the paste of the positive electrode mixture is prepared, N-methyl-2-pyrrolidone (hereinafter, referred to as NMP in some cases) and the solvents described in WO2019/098384A1 or US2020/0274158A1 are exemplary examples.

As a method for applying the paste of the positive electrode mixture to the positive electrode current collector, for example, a slit die coating method, a screen coating method, a curtain coating method, a knife coating method, a gravure coating method, and an electrostatic spraying method are exemplary examples.

The positive electrode can be produced by the method described above.

(Negative electrode)

The negative electrode in the lithium secondary battery only needs to be a material which can be doped with lithium ions and from which lithium ions can be de-doped at a potential lower than that of the positive electrode, and an electrode in which a negative electrode mixture containing a negative electrode active material is supported by a negative electrode current collector and an electrode formed of a negative electrode active material alone are exemplary examples.

(Negative electrode active material)

As the negative electrode active material in the negative electrode, materials which are a carbon material, a chalcogen compound (oxide, sulfide, or the like), a nitride, a metal, or an alloy and which can be doped with lithium ions and from which lithium ions can be de-doped at a potential lower than that of the positive electrode are exemplary examples.

As the carbon material that can be used as the negative electrode active material, graphite such as natural graphite and artificial graphite, cokes, carbon black, a carbon fiber, and a calcined product of an organic polymer compound can be exemplary examples.

As oxides that can be used as the negative electrode active material, oxides of silicon represented by a formula $SiO_x$ (here, x is a positive real number) such as $SiO_2$ and $SiO$; oxides of tin represented by a formula $SnO_x$ (here, x is a positive real number) such as $SnO_2$ and $SnO$; and composite metal oxides containing lithium and titanium or vanadium such as $Li_4Ti_5O_{12}$ and $LiVO_2$ can be exemplary examples.

In addition, as the metal that can be used as the negative electrode active material, lithium metal, silicon metal, tin metal, and the like can be exemplary examples. As a material that can be used as the negative electrode active material, the materials described in WO 2019/098384A1 or US2020/0274158A1 may be used.

These metals and alloys are used mainly singly as an electrode after being processed into, for example, a foil shape.

Among the above-described negative electrode active materials, the carbon material containing graphite such as natural graphite or artificial graphite as a main component is preferably used for the reason that the potential of the negative electrode rarely changes (the potential flatness is favorable) from an uncharged state to a fullycharged state during charging, the average discharging potential is low, the capacity retention at the time of repeatedly charging and discharging the lithium secondary battery is high (the cycle characteristics are favorable), and the like. The shape of the carbon material may be, for example, any of a flaky shape such as natural graphite, a spherical shape such as mesocarbon microbeads, a fibrous shape such as a graphitized carbon fiber, or an aggregate of fine powder.

The negative electrode mixture may contain a binder as necessary. As the binder, thermoplastic resins can be exemplary examples, and specifically, PVdF, thermoplastic polyimide, carboxymethylcellulose (hereinafter, referred to as CMC in some cases), styrene-butadiene rubber (hereinafter, referred to as SBR in some cases), polyethylene, and polypropylene can be exemplary examples.

(Negative electrode current collector)

As the negative electrode current collector in the negative electrode, a stripshaped member formed of a metal material such as Cu, Ni, or stainless steel as the forming material can be an exemplary example.

As a method for supporting the negative electrode mixture by the negative electrode current collector, similar to the case of the positive electrode, a method in which the negative electrode mixture is formed by pressurization and a method in which a paste of the negative electrode mixture is prepared using a solvent or the like, applied and dried on the negative electrode current collector, and then the negative electrode mixture is compressed by pressing are exemplary examples.

(Separator)

As the separator in the lithium secondary battery, it is possible to use, for example, a material that is made of a material such as a polyolefin resin such as polyethylene or polypropylene, a fluororesin, or a nitrogen-containing aromatic polymer and has a form such as a porous film, a non-woven fabric, or a woven fabric. In addition, the separator may be formed using two or more of these materials or the separator may be formed by laminating these materials. In addition, the separators described in JP-A-2000-030686 or US20090111025A1 may be used.

(Electrolytic solution)

The electrolytic solution in the lithium secondary battery of the present embodiment contains an electrolyte and an organic solvent.

As the electrolyte that is contained in the electrolytic solution, lithium salts such as $LiClO_4$ and $LiPF_6$ are exemplary examples, and a mixture of two or more thereof may be used. In addition, the electrolytes described in WO 2019/098384A1 or US2020/0274158A1 may be used.

In addition, as the organic solvent that is contained in the electrolytic solution, for example, carbonates such as propylene carbonate, ethylene carbonate, dimethyl carbonate, diethyl carbonate, and ethyl methyl carbonate can be used. In addition, as the organic solvent that is contained in the electrolytic solution, the organic solvents described in WO2019/098384A1 or US2020/0274158A1 can be used.

As the organic solvent, two or more of these are preferably mixed and used, and a solvent mixture of a cyclic carbonate and a non-cyclic carbonate and a solvent mixture of a cyclic carbonate and ethers are more preferable.

In addition, as the electrolytic solution, it is preferable to use an electrolytic solution containing a lithium salt containing fluorine such as $LiPF_6$ and an organic solvent having a fluorine substituent since the safety of lithium secondary batteries to be obtained is enhanced. As the electrolyte and the organic solvent that are contained in the electrolytic solution, the electrolytes and the organic solvents described in WO2019/098384A1 or US2020/0274158A1 may be used.

Since the positive electrode having such a configuration have the CAM particles with the above-described configuration, it is possible to improve the charge capacity and the discharge capacity of the lithium secondary battery.

Furthermore, the lithium secondary battery having the above-described configuration has the above-described positive electrode and thus becomes a secondary battery having a large charge capacity and a large discharge capacity.

<All-solid-state lithium-ion secondary battery>

Next, a positive electrode in which CAM particles for a lithium secondary battery that are produced by the present embodiment are used as a CAM for an all-solid-state lithium-ion secondary battery and an all-solid-state lithium-ion secondary battery having this positive electrode will be described while describing the configuration of the all-solid-state lithium-ion secondary battery.

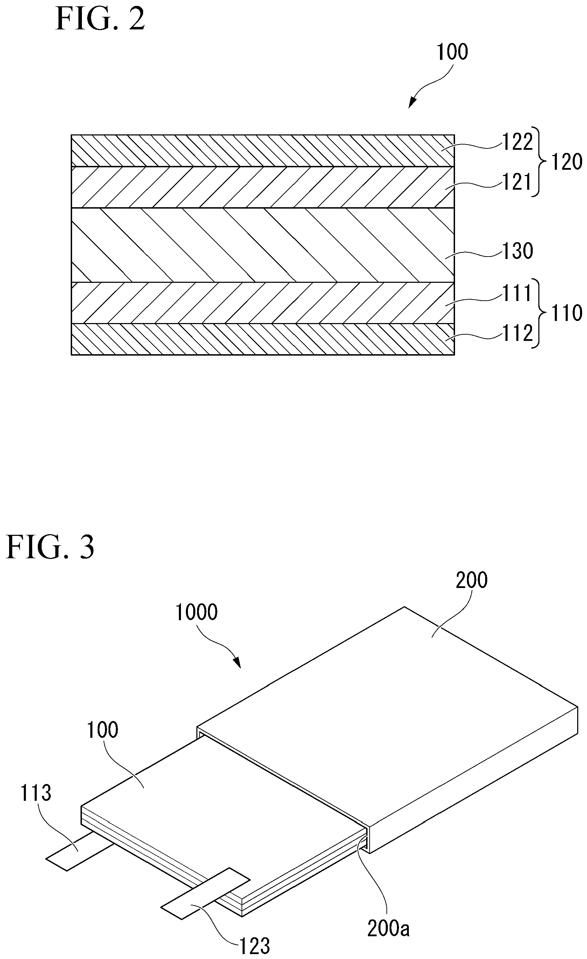

Figs. 2 and 3 are schematic views showing an example of the all-solid-state lithium-ion secondary battery. Fig. 2 is a schematic view showing a laminate that the all-solid-state lithium-ion secondary battery includes. Fig. 3 is a schematic view showing an entire configuration of the all-solid-state lithium-ion secondary battery.

An all-solid-state lithium-ion secondary battery 1000 has a laminate 100 having a positive electrode 110, a negative electrode 120, and a solid electrolyte layer 130 and an exterior body 200 accommodating the laminate 100. In addition, the all-solid-state lithium-ion secondary battery 1000 may have a bipolar structure in which a CAM and a negative electrode active material are disposed on both sides of a current collector. As specific examples of the bipolar structure, for example, the structures described in JP-A-2004-95400 are exemplary examples.

A material that configures each member will be described below.

The laminate 100 may have an external terminal 113 that is connected to a positive electrode current collector 112 and an external terminal 123 that is connected to a negative electrode current collector 122. In addition, the all-solid-state lithium-ion secondary battery 1000 may have a separator between the positive electrode 110 and the negative electrode 120.

In the laminate 100, the positive electrode 110 and the negative electrode 120 sandwich the solid electrolyte layer 130 so as not to short-circuit each other. In addition, the all-solid-state lithium-ion secondary battery 1000 may have a separator, which has been used in conventional liquid-based lithium ion secondary batteries, between the positive electrode 110 and the negative electrode 120 to prevent a short circuit between the positive electrode 110 and the negative electrode 120.

The all-solid-state lithium-ion secondary battery 1000 has an insulator, not shown, that insulates the laminate 100 and the exterior body 200 from each other or a sealant, not shown, that seals an opening portion 200a of the exterior body 200.

As the exterior body 200, a container formed of a highly corrosion-resistant metal material such as aluminum, stainless steel or nickel-plated steel can be used. In addition, as the exterior body 200, a container obtained by processing a laminate film having at least one surface on which a corrosion resistant process has been carried out into a bag shape can also be used.

As the shape of the all-solid-state lithium-ion secondary battery 1000, for example, shapes such as a coin type, a button type, a paper type (or a sheet type), a cylindrical type, a square type, and a laminate type (pouch type) can be exemplary examples.

The all-solid-state lithium-ion secondary battery 1000 is shown in the drawings to have one laminate 100, but is not limited thereto. The all-solid-state lithium-ion secondary battery 1000 may have a configuration in which the laminate 100 is used as a unit cell and a plurality of unit cells (laminates 100) is sealed inside the exterior body 200.

Hereinafter, each configuration will be described in order.

(Positive electrode)

The positive electrode 110 has a positive electrode active material layer 111 and a positive electrode current collector 112.

The positive electrode active material layer 111 contains the CAM particles, which are one aspect of the present invention described above. In addition, the positive electrode active material layer 111 may contain a solid electrolyte, a conductive material, and a binder.

(Solid electrolyte)

As the solid electrolyte that the positive electrode active material layer 111 may have, a solid electrolyte that is lithium ion-conductive and used in well-known all-solid-state batteries can be adopted. As the solid electrolyte, an inorganic electrolyte and an organic electrolyte can be exemplary examples. As the inorganic electrolyte, an oxide-based solid electrolyte, a sulfide-based solid electrolyte, and a hydride-based solid electrolyte can be exemplary examples. As the organic electrolyte, polymer-based solid electrolytes are exemplary examples. As each electrolyte, the compounds described in WO 2020/208872A1, US2016/0233510A1, US2012/0251871A1, and US2018/0159169A1 are exemplary examples, and examples thereof include the following compounds.

(Oxide-based solid electrolyte)

As the oxide-based solid electrolyte, for example, a perovskite-type oxides, a NASICON-type oxide, a LISICON-type oxide, a garnet-type oxides, and the like are exemplary examples. Specific examples of each oxide include the compounds described in WO 20201208872A1, US2016/0233510A1, and US2020/0259213A1, and, for example, the following compounds are exemplary examples.

As the garnet-type oxide, Li-La-Zr-based oxides such as $Li_7La_3Zr_2O_{12}$ (LLZ) are exemplary examples.

The oxide-based solid electrolyte may be a crystalline material or an amorphous (amorphous) material.

(Sulfide-based solid electrolyte)

As the sulfide-based solid electrolyte, $Li_2S$-$P_2S_5$-based compounds, $Li_2S$-$SiS_2$based compounds, $Li_2S$-$GeS_2$-based compounds, $Li_2S$-$B_2S_3$-based compounds, $Li_2S$-$P_2S_3$-based compounds, $LiI$-$Si_2S$-$P_2S_5$-based compounds, $LiI$-$Li_2S$-$P_2O_5$-based compounds, $LiI$-$Li_3PO_4$-$P_2S_5$-based compounds, $Li_{10}GeP_2Si_2$, and the like can be exemplary examples.

In the present specification, the expression "-based compound" that indicates the sulfide-based solid electrolyte is used as a general term for solid electrolytes mainly containing a raw material written before "-based compound" such as "$Li_2S$" or "$P_2S_5$". For example, the $Li_2S$-$P_2S_5$-based compounds include solid electrolytes containing $Li_2S$ and $P_2S_5$ and further containing a different raw material. The proportion of $Li_2S$ that is contained in the $Li_2S$-$P_2S_5$-based compound is, for example, 50 to 90 mass% with respect to the entire $Li_2S$-$P_2S_5$-based compound. The proportion of $P_2S_5$ that is contained in the $Li_2S$-$P_2S_5$-based compound is, for example, 10 to 50 mass% with respect to the entire $Li_2S$-$P_2S_5$-based compound. In addition, the proportion of the different raw material that is contained in the $Li_2S$-$P_2S_5$-based compound is, for example, 0 to 30 mass% with respect to the entire $Li_2S$-$P_2S_5$-based compound. In addition, the $Li_2S$-$P_2S_5$-based compounds also include solid electrolytes containing $Li_2S$ and $P_2S_5$ in different mixing ratios.

As the $Li_2S$-$P_2S_5$-based compounds, $Li_2S$-$P_2S_5$, $Li_2S$-$P_2S_5$-$LiI$, $Li_2S$-$P_2S_5$-$LiCl$, $Li_2S$-$P_2S_5$-$LiBr$, $Li_2S$-$P_2S_5$-$LiI$-$LiBr$, and the like can be exemplary examples.

As the $Li_2S$-$SiS_2$-based compounds, $Li_2S$-$SiS_2$, $Li_2S$-$SiS_2$-$LiI$, $Li_2S$-$SiS_2$-$LiBr$, $Li_2S$-$SiS_2$-$LiCl$, $Li_2S$-$SiS_2$-$B_2S_3$-$LiI$, $Li_2S$-$SiS_2$-$P_2S_5$-$LiI$, $Li_2S$-$SiS_2$-$P_2S_5$-$LiCl$, and the like are exemplary examples.

As the $Li_2S$-$GeS_2$-based compounds, $Li_2S$-$GeS_2$, $Li_2S$-$GeS_2$-$P_2S_5$, and the like are exemplary examples.

The sulfide-based solid electrolyte may be a crystalline material or an amorphous (amorphous) material.

Two or more solid electrolytes can be jointly used as long as the effect of the invention is not impaired.

(Conductive material and binder)

As the conductive material that the positive electrode active material layer 111 has, the materials described in the above-described (conductive material) can be used. In addition, as for the proportion of the conductive material in the positive electrode mixture, the proportions described in the above-described (conductive material) can be applied in the same manner. In addition, as the binder that the positive electrode has, the materials described in the above-described (binder) can be used.

(Positive electrode current collector)

As the positive electrode current collector 112 that the positive electrode 110 has, the materials described in the above-described (positive electrode current collector) can be used.

As a method for supporting the positive electrode active material layer 111 by the positive electrode current collector 112, a method in which the positive electrode active material layer 111 is formed by pressurization on the positive electrode current collector 112 is an exemplary example. A cold press or a hot press can be used for the pressurization.

In addition, the positive electrode active material layer 111 may be supported by the positive electrode current collector 112 by preparing a paste of a mixture of the CAM, the solid electrolyte, the conductive material, and the binder using an organic solvent to produce a positive electrode mixture, applying and drying the positive electrode mixture to be obtained on at least one surface side of the positive electrode current collector 112, and fixing the positive electrode mixture by pressing.

In addition, the positive electrode active material layer 111 may be supported by the positive electrode current collector 112 by preparing a paste of a mixture of the CAM, the solid electrolyte, and the conductive material using an organic solvent to produce a positive electrode mixture, applying and drying the positive electrode mixture to be obtained on at least one surface side of the positive electrode current collector 112, and sintering the positive electrode mixture.

As the organic solvent that can be used for the positive electrode mixture, the same organic solvent as the organic solvent that can be used in the case of preparing the paste of the positive electrode mixture described in the above-described (positive electrode current collector) can be used.

As a method of applying the positive electrode mixture to the positive electrode current collector 112, the methods described in the above-described section (positive electrode current collector) are exemplary example.

The positive electrode 110 can be produced by the method described above.

(Negative electrode)

The negative electrode 120 has a negative electrode active material layer 121 and the negative electrode current collector 122. The negative electrode active material layer 121 contains a negative electrode active material. In addition, the negative electrode active material layer 121 may contain a solid electrolyte and a conductive material. As the negative electrode active material, the negative electrode current collector, the solid electrolyte, the conductive material, and a binder, those described above can be used.

As a method for supporting the negative electrode active material layer 121 by the negative electrode current collector 122, similar to the case of the positive electrode 110, a method in which the negative electrode active material layer 121 is formed by pressurization, a method in which a paste-form negative electrode mixture containing a negative electrode active material is applied and dried on the negative electrode current collector 122 and then the negative electrode active material layer 121 is compressed by pressing, and a method in which a paste-form negative electrode mixture containing a negative electrode active material is applied, dried and then sintered on the negative electrode current collector 122 are exemplary examples.

(Solid electrolyte layer)

The solid electrolyte layer 130 has the above-described solid electrolyte.

The solid electrolyte layer 130 can be formed by depositing a solid electrolyte of an inorganic substance on the surface of the positive electrode active material layer 111 in the above-described positive electrode 110 by a sputtering method.

In addition, the solid electrolyte layer 130 can be formed by applying and drying a paste-form mixture containing a solid electrolyte on the surface of the positive electrode active material layer 111 in the above-described positive electrode 110. The solid electrolyte layer 130 may be formed by pressing the dried paste-form mixture and further pressurizing the paste-form mixture by a cold isostatic pressure method (CIP).

The laminate 100 can be produced by laminating the negative electrode 120 on the solid electrolyte layer 130 provided on the positive electrode 110 as described above using a well-known method such that the negative electrode electrolyte layer 121 comes into contact with the surface of the solid electrolyte layer 130.

According to the positive electrode active material for an all-solid-state lithium-ion battery having the above-described configuration, it is possible to smoothly exchange lithium ions between the positive electrode and the solid electrolyte and to improve the battery characteristics.

According to the electrode having the above-described configuration, since the all-solid-state lithium-ion battery has the positive electrode active material for an all-solid-state lithium-ion battery, it is possible to improve the battery characteristics of the all-solid-state lithium-ion battery.

As one aspect, the present invention also includes the following aspects.

[12] CAM particles for a lithium secondary battery containing at least Li and Ni, in which, when a volume magnetic susceptibility of one whole particle of the CAM particles for a lithium secondary battery is obtained in each of a plurality of the particles, a mode of individual volume magnetic susceptibilities in a range of 0.004 or more and 0.04 or less is 0.0043 or more and 0.0117 or less.

[13] The CAM particles for a lithium secondary battery according to [12], in which an average value of the volume magnetic susceptibilities is 0.005 or more and 0.08 or less.

[14] The CAM particles for a lithium secondary battery according to [12] or [13], in which a median value of the volume magnetic susceptibilities is 0.0001 or more and 0.1 or less.

[15] The CAM particles for a lithium secondary battery according to any one of [12] to [14], in which a standard deviation of the volume magnetic susceptibilities is 0.005 or more and 0.1 or less.

[16] The CAM particles for a lithium secondary battery according to any one of [12] to [15], in which an average value of number-based particle diameters of the CAM particles for a lithium secondary battery is 1.0 $\mu$m or more and 20 $\mu$m or less.

[17] The CAM particles for a lithium secondary battery according to any one of [12] to [16], in which a median value of number-based particle diameters of the CAM particles for a lithium secondary battery is 1.0 $\mu$m or more and 20 $\mu$m or less.

[18] The CAM particles for a lithium secondary battery according to any one of [12] to [17], in which a standard deviation of number-based particle diameters of the CAM particles for a lithium secondary battery is 0.5 $\mu$m or more and 15 $\mu$m or less.

[19] The CAM particles for a lithium secondary battery according to any one of [12] to [18], containing a paramagnetic material or a diamagnetic material.

[20] The CAM particles for a lithium secondary battery according to any one of [12] to [19], which is represented by a composition formula (1).

$$Li[Li_x(Ni_{(1-y-z-w)}Co_yMn_zM_w)_{1-x}]O_2 \cdots \qquad (I)$$

(Here, M represents one or more elements selected from the group consisting of Cu, Ti, Mg, Al, W, B, Mo, Nb, Zn, Sn, Zr, Ga, and V, and $-0.1 \leq x \leq 0.2$, $0 < y \leq 0.5$, $0 \leq z \leq 0.8$, $0 \leq w \leq 0.1$, and $y + z + w < 1$ are satisfied.)

[21] A positive electrode for a lithium secondary battery containing the CAM particles for a lithium secondary battery according to any one of [12] to [20].

[22] A lithium secondary battery having the positive electrode for a lithium secondary battery according to [21].

[Examples]

Next, the present invention will be described in more detail using examples.

<Composition analysis>

The composition analysis of CAM particles to be produced by a method to be described below was carried out using an ICP emission spectroscopic analyzer (SPS 3000, manufactured by Seiko Instruments Inc.) after a powder the obtained CAM particles was dissolved in hydrochloric acid.

<Measurement method of volume magnetic susceptibility>

A medium that was used for the measurement was 75% glycerin. The measurement temperature was set to normal temperature (23°C). The following formula was used to calculate the volume magnetic susceptibility. A magnetic field was applied to the CAM particles dispersed in the medium, and an image of the moving CAM particles was analyzed, thereby measuring the CAM particles and the volume magnetic susceptibility.

[Math 2]

$$v = \frac{2}{9} \frac{\left( X_p - X_m \right)}{\mu_0 \eta} r^2 B \frac{dB}{dx}$$

In the formula, $X_p$ is the volume magnetic susceptibility of the CAM particle. $X_m$ is the volume magnetic susceptibility of the medium, $\eta$ is the coefficient of viscosity, $\mu_0$ is the magnetic permeability of the vacuum. B is the magnetic flux density. r is the radius of the CAM particle. v is the magnetic migration velocity of the moving CAM particle.

The mode, average value, median value, and standard deviation of 1000 CAM particles were obtained using the value of each of the obtained volume magnetic susceptibilities.

<Measurement method of number-based particle diameters>

The average value of the number-based particle diameters of the CAM particles was calculated by image analysis means with a particle diameter measuring instrument that was used together with a volume magnetic susceptibility measuring instrument.

As the particle diameter measuring instrument, NANOMEASURE (KNM-001) manufactured by Yamato Scientific Co., Ltd. was used.

The average value, median value, and standard deviation of 1000 CAM particles were obtained using the value of each of the obtained number-based particle diameters.

<Analysis of paramagnetic component or diamagnetic component>

The composition analysis of the CAM particles was carried out by an analytical method in which inductively coupled plasma (TCP) was used.

The median value of the volume-based particle diameters of an alumina medium was calculated by a sieving method with a vibrating sieving device. As the vibrating sieving device, a circular vibrating sieve (KIC type 1200 type) manufactured by Kowa Kogyosho Co., Ltd. was used.

<Production of positive electrode for lithium secondary battery>

A paste-like positive electrode mixture was prepared by adding and kneading the CAM particles, a conductive material (acetylene black), and a binder (PVdF) in proportions at which the composition of CAM particles:conductive material:binder = 92:5:3 (mass ratio) was reached. During the preparation of the positive electrode mixture, N-methyl-2-pyrrolidone was used as an organic solvent.

<Production of lithium secondary battery (coin-type half cell)>

The following operation was carried out in a glove box under an argon atmosphere.

The positive electrode for a lithium secondary battery produced in the section <Production of positive electrode for lithium secondary battery> was placed on the lower lid of a part for a coin type battery R2032 (manufactured by Hohsen Corp.) with the aluminum foil surface facing downward, and a separator (polyethylene porous film) was placed on the positive electrode. 300 $\mu$l of an electrolytic solution was poured thereinto. As the electrolytic solution, an electrolytic solution obtained by dissolving $LiPF_6$ in a liquid mixture of ethylene carbonate, dimethyl carbonate, and ethyl methyl carbonate in a volume ratio of 30:35:35 in a proportion of 1.0 mol/l was used.

Next, lithium metal was used as a negative electrode, and the negative electrode was placed on the upper side of the laminate film separator. An upper lid was placed through a gasket and caulked using a caulking machine, thereby producing a lithium secondary battery (coin-type half cell R2032; hereinafter, referred to as the "half cell" in some cases).

[Charge and discharge evaluation: initial charge capacity and initial discharge capacity]

Using the coin-type lithium secondary battery produced by the above-described method, the initial charge capacity and the initial discharge capacity were measured by the above-described method for measuring the "initial charge capacity" and the "initial discharge capacity".

<<Example 1>>

1. Production of CAM particles 1

After water was poured into a reaction vessel equipped with a stirrer and an overflow pipe, an aqueous solution of sodium hydroxide was added thereto, and the liquid temperature was held at 50°C.

A nickel sulfate aqueous solution, a cobalt sulfate aqueous solution, and a manganese sulfate aqueous solution were mixed in proportions in which the atom ratio of nickel atoms, cobalt atoms, and manganese atoms reached 85:10:5, thereby obtaining a raw material liquid mixture.

Next, the raw material liquid mixture and an ammonium sulfate aqueous solution, as a complexing agent, were continuously added into the reaction vessel under stirring. A sodium hydroxide aqueous solution was timely added dropwise such that the pH of the solution in the reaction vessel reached 12 (when measured at a liquid temperature of 40°C), and nickel cobalt manganese composite hydroxide particles were obtained.

The nickel cobalt manganese composite hydroxide particles were washed, then, dehydrated with a centrifuge, isolated, and dried at 150°C, thereby obtaining a nickel cobalt manganese composite hydroxide 1.

The nickel cobalt manganese composite hydroxide 1 and a lithium hydroxide monohydrate powder were weighed in proportions in which Li/(Ni + Co + Mn) reached 1.10.

Potassium sulfate, which was an inert melting agent, was weighed in a proportion in which the mole ratio of potassium sulfate to the lithium hydroxide monohydrate powder reached 0.1.

The nickel cobalt manganese composite hydroxide 1, the lithium hydroxide monohydrate powder, and potassium sulfate were mixed in a crucible, thereby obtaining a mixture 1.

An alumina medium was added to the obtained mixture 1 at a mass ratio of 5% by mass and mixed. The alumina medium contained 99% by mass or more of alumina with respect to the total mass of the alumina medium and contained Si, K, Na, and Fe as main impurities. The median value of the volume-based particle diameters of the alumina medium was 2.0 mm.

After that, the mixture was calcined at 820°C for 10 hours in an oxygen atmosphere.

After that, the mixture was washed with water and dried at 760°C for 5 hours in the oxygen atmosphere. Therefore, a powder of CAM particles 1 was obtained.

<<Example 2>>

A powder of CAM particles 2 was obtained by the same method as in Example 1 except that an aluminum medium containing 5% by mass of an aluminum element in terms of the weight ratio was added to the mixture 1 at a mass ratio of 15% by mass.

<<Example 3>>

1. Production of CAM particles 3

After water was poured into a reaction vessel equipped with a stirrer and an overflow pipe, an aqueous solution of sodium hydroxide was added thereto, and the liquid temperature was held at 50°C.

A nickel sulfate aqueous solution, a cobalt sulfate aqueous solution, and an aluminum sulfate aqueous solution were mixed in proportions in which the atom ratio of nickel atoms, cobalt atoms, and aluminum atoms reached 88:9:3, thereby obtaining a raw material liquid mixture.

Next, the raw material liquid mixture and an ammonium sulfate aqueous solution, as a complexing agent, were continuously added into the reaction vessel under stirring. A sodium hydroxide aqueous solution was timely added dropwise such that the pH of the solution in the reaction vessel reached 12 (when measured at a liquid temperature of 40°C), and nickel cobalt aluminum composite hydroxide particles were obtained.

The nickel cobalt aluminum composite hydroxide particles were washed, then, dehydrated with a centrifuge, isolated, and dried at 150°C, thereby obtaining a nickel cobalt aluminum composite hydroxide 1.

The nickel cobalt aluminum composite hydroxide 1 and a lithium hydroxide monohydrate powder were weighed in proportions in which Li/(Ni + Co + Mn) reached 1.10.

The nickel cobalt aluminum composite hydroxide 1 and the lithium hydroxide monohydrate powder were mixed in a crucible, thereby obtaining a mixture 2.

The alumina medium that was used in Example 1 was added to the obtained mixture 2 at a mass ratio of 5% by mass and mixed.

After that, the mixture was calcined at 720°C for 6 hours in an oxygen atmosphere.

After that, the mixture was washed with water and dried at 250°C for 10 hours in a nitrogen atmosphere. Therefore, a powder of CAM particles 3 was obtained.

<<Example 4>>

A powder of CAM particles 4 was obtained by the same method as in Example 3 except that an aluminum medium containing 5% by mass of an aluminum element in terms of the mass ratio was added to the mixture 2 at a weight ratio of 15% by mass.

<<Comparative Example 1>>

A powder of CAM particles 5 was obtained by the same method as in Example 1 except that neither an alumina medium nor an aluminum medium was added.

<<Comparative Example 2>>

A powder of CAM particles 6 was obtained by the same method as in Example 3 except that neither an alumina medium nor an aluminum medium was added.

[Table 1]

|  | Unit | Example 1 | Example 2 | Example 3 | Example 4 | Comparative Example 1 | Comparative Example 2 |
|---|---|---|---|---|---|---|---|
| Ni/Co/Mn/Al | mol% | 85/10/5/0 | 85/10/5/0 | 88/9/0/3 | 88/9/0/3 | 85/10/5/0 | 88/9/0/3 |
| Additive | - | Alumina medium | Aluminum medium | Alumina medium | Aluminum medium | None | None |
| Number-based particle diameter average value | μm | 4.22 | 3.50 | 4.09 | 3.77 | 2.84 | 4.56 |

(continued)

| | Unit | Example 1 | Example 2 | Example 3 | Example 4 | Comparative Example 1 | Comparative Example 2 |
|---|---|---|---|---|---|---|---|
| Number-based particle diameter median value | μm | 3.18 | 3.45 | 3.24 | 3.62 | 2.17 | 3.85 |
| Number-based particle diameter standard deviation | μm | 3.33 | 1.97 | 2.69 | 2.09 | 1.71 | 2.95 |
| Volume magnetic susceptibility mode | - | 0.011 | 0.010 | 0.010 | 0.008 | 0.016 | 0.012 |
| Volume magnetic susceptibility average value | - | 0.01000 | 0.02440 | 0.01340 | 0.01540 | 0.01690 | 0.00960 |
| Volume magnetic susceptibility median value | - | 0.00032 | 0.01550 | 0.00840 | 0.01070 | 0.01220 | 0.00033 |
| Volume magnetic susceptibility standard deviation | - | 0.01840 | 0.03020 | 0.01870 | 0.02430 | 0.02520 | 0.01800 |
| Initial charge capacity | mAh/g | 230.6 | 228.9 | 222.1 | 224.2 | 225.2 | 220.1 |
| Initial discharge capacity | mAh/g | 204.8 | 203.9 | 192.8 | 195.1 | 196.7 | 191.4 |

As shown by the results shown in Table 1, when Examples 1 and 2 and Comparative Example 1 were compared, the initial charge capacity and the initial discharge capacity were higher in the examples than in the comparative example.
In addition, when Examples 3 and 4 and Comparative Example 2 were compared, the initial charge capacity and the initial discharge capacity were higher in the examples than in the comparative example.

[Industrial Applicability]

According to the present invention, it is possible to provide positive electrode active material particles for a lithium secondary battery, a positive electrode for a lithium secondary battery, and a lithium secondary battery in which lithium ions can smoothly migrate and with which the battery characteristics of the lithium secondary battery can be improved.

[Reference Signs List]

1: Separator
2: Positive electrode
3: Negative electrode
4: Electrode group
5: Battery can
6: Electrolytic solution
7: Top insulator
8: Sealing body
10: Lithium secondary battery

21: Positive electrode lead
31: Negative electrode lead
100: Laminate
110: Positive electrode
111: Positive electrode active material layer
112: Positive electrode current collector
113: External terminal
120: Negative electrode
121: Negative electrode electrolyte layer
122: Negative electrode current collector
123: External terminal
130: Solid electrolyte layer
200: Exterior body
200a: Opening portion
1000: All-solid-state lithium-ion secondary battery

**Claims**

1. Positive electrode active material particles for a lithium secondary battery comprising at least Li and Ni, wherein, when a volume magnetic susceptibility of one whole particle of the positive electrode active material particles for a lithium secondary battery is obtained in each of a plurality of the particles, a mode of individual volume magnetic susceptibilities in a range of 0.004 or more and 0.04 or less is 0.004 or more and less than 0.012.

2. The positive electrode active material particles for a lithium secondary battery according to Claim 1, wherein an average value of the volume magnetic susceptibilities is 0.001 or more and 0.3 or less.

3. The positive electrode active material particles for a lithium secondary battery according to Claim 1 or 2, wherein a median value of the volume magnetic susceptibilities is 0.00003 or more and 0.16 or less.

4. The positive electrode active material particles for a lithium secondary battery according to any one of Claims 1 to 3, wherein a standard deviation of the volume magnetic susceptibilities is 0.0018 or more and 0.4 or less.

5. The positive electrode active material particles for a lithium secondary battery according to any one of Claims 1 to 4, wherein an average value of number-based particle diameters of the positive electrode active material particles for a lithium secondary battery is 0.2 $\mu$m or more and 50 $\mu$m or less.

6. The positive electrode active material particles for a lithium secondary battery according to any one of Claims 1 to 5, wherein a median value of number-based particle diameters of the positive electrode active material particles for a lithium secondary battery is 0.2 $\mu$m or more and 40 $\mu$m or less.

7. The positive electrode active material particles for a lithium secondary battery according to any one of Claims 1 to 6, wherein a standard deviation of number-based particle diameters of the positive electrode active material particles for a lithium secondary battery is 0.2 $\mu$m or more and 40 $\mu$m or less.

8. The positive electrode active material particles for a lithium secondary battery according to any one of Claims 1 to 7, comprising:
a paramagnetic material or a diamagnetic material.

9. The positive electrode active material particles for a lithium secondary battery according to any one of Claims 1 to 8, which is represented by a composition formula (1),

$$Li[Li_x(Ni_{(1-y-z-w)}Co_yMn_zM_w)_{1-x}]O_2... \qquad (1)$$

(here, M represents one or more elements selected from the group consisting of Cu, Ti, Mg, Al, W, B, Mo, Nb, Zn, Sn, Zr, Ga, and V, and $-0.1 \leq x \leq 0.2$, $0 < y \leq 0.5$, $0 \leq z \leq 0.8$, $0 \leq w \leq 0.1$, and $y + z + w < 1$ are satisfied).

10. A positive electrode for a lithium secondary battery comprising:

the positive electrode active material particles for a lithium secondary battery according to any one of Claims 1 to 9.

11. A lithium secondary battery comprising:
the positive electrode for a lithium secondary battery according to Claim 10.

FIG. 1A

FIG. 1B

## FIG. 2

## FIG. 3

## INTERNATIONAL SEARCH REPORT

| International application No. |
| --- |
| PCT/JP2021/015128 |

A. CLASSIFICATION OF SUBJECT MATTER
Int.Cl. H01M4/505(2010.01)i, H01M4/525(2010.01)i
FI: H01M4/525, H01M4/505

According to International Patent Classification (IPC) or to both national classification and IPC

B. FIELDS SEARCHED

Minimum documentation searched (classification system followed by classification symbols)
Int.Cl. H01M4/505, H01M4/525

Documentation searched other than minimum documentation to the extent that such documents are included in the fields searched
    Published examined utility model applications of Japan        1922-1996
    Published unexamined utility model applications of Japan      1971-2021
    Registered utility model specifications of Japan              1996-2021
    Published registered utility model applications of Japan      1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2012-4110 A (SAMSUNG SDI CO., LTD.) 05 January 2012 (2012-01-05) | 1-11 |
| A | JP 2012-89364 A (PANASONIC CORPORATION) 10 May 2012 (2012-05-10) | 1-11 |
| A | JP 2009-173486 A (TOYOTA CENTRAL R&D LABS., INC.) 06 August 2009 (2009-08-06) | 1-11 |
| A | JP 2018-517250 A (LG CHEMICAL LTD.) 28 June 2018 (2018-06-28) | 1-11 |

☐ Further documents are listed in the continuation of Box C.        ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 04 June 2021 | 15 June 2021 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

International application No.

PCT/JP2021/015128

| | | |
|---|---|---|
| JP 2012-4110 A | 05 January 2012 | US 2011/0305947 A1<br>EP 2395578 A1<br>KR 10-2011-0136687 A<br>CN 102280633 A |
| JP 2012-89364 A | 10 May 2012 | (Family: none) |
| JP 2009-173486 A | 06 August 2009 | (Family: none) |
| JP 2018-517250 A | 28 June 2018 | US 2018/0047974 A1<br>KR 10-2017-0063146 A<br>CN 107615525 A |

Form PCT/ISA/210 (patent family annex) (January 2015)

**EP 4 138 159 A1**

**REFERENCES CITED IN THE DESCRIPTION**

**Patent documents cited in the description**

- JP 2020072300 A
- JP 2005145790 A
- JP 2002201028 A
- JP 6734491 B
- WO 2019098384 A1
- US 20200274158 A1
- JP 2000030686 A
- US 20090111025 A1
- JP 2004095400 A
- WO 2020208872 A1
- US 20160233510 A1
- US 20120251871 A1
- US 20180159169 A1
- WO 20201208872 A1
- US 20200259213 A1